# EUROPEAN PATENT APPLICATION

(11) **EP 4 669 009 A1**
(43) Date of publication of application: **24.12.2025**
(21) Application number: 23921913.2
(22) Date of filing: 16.02.2023
(51) Int. Cl.: H04W 74/08

(54) **RANDOM ACCESS RESOURCE CONFIGURATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); LIU, Xiaofei, Beijing 100085 (CN); QIAO, Xuemei, Beijing 100085 (CN)
(74) Representative: Dehns Germany Partnerschaft mbB
(86) International application number: PCT/CN2023/076618
(87) International publication number: WO 2024/168759

(57) **Abstract**

The present disclosure provides a random access resource configuration method and apparatus, a device, and a storage medium. The method can be executed by a terminal device. The method comprises: determining a configuration condition of a first time-frequency resource, wherein the first time-frequency resource is a time-frequency resource configured by a network device and dedicated to random access of a first-type terminal device; and according to the configuration situation, selecting a second time-frequency resource for random access of the terminal device, wherein the terminal device is a first-type terminal device. In the present disclosure, a reasonable time-frequency resource can be configured for a terminal device such as an eRedCap terminal device, so as to implement random access of the terminal device.

## Description

### TECHNICAL FIELD

The present disclosure relates to the field of wireless communication technology, and in particular, to a method and apparatus for random access resource configuration, a device, and a storage medium.

### BACKGROUND

In the wireless communication technology of release 18 (R18) version in the third generation partnership project (3GPP), a terminal device of an enhanced reduced capability (eRedCap) type is introduced. Compared with a terminal device of a reduced capability (RedCap) type in the wireless communication technology of the R17 version, the newly introduced terminal device of the eRedCap type is more limited in the time-frequency resource.

In this case, in a random access procedure, how to configure a resource for a terminal device of the eRedCap type is an urgent problem to be solved.

### SUMMARY

The present disclosure provides a method and apparatus for random access resource configuration, a device, and a storage medium, to implement resource configuration for a terminal device of the eRedCap type in a random access procedure.

In a first aspect, the present disclosure provides a method for random access resource configuration. The method for random access resource configuration may be performed by a terminal device. The method for random access resource includes: determining a configuration condition of a first time-frequency resource, where the first time-frequency resource is a time-frequency resource configured by a network device and dedicated to random access performed by a first-type terminal device; and selecting, according to the configuration condition, a second time-frequency resource used for random access performed by the terminal device. The terminal device is the first-type terminal device.

In some possible implementations, determining the configuration condition of the first time-frequency resource includes: in a case that first indication information is configured in resource configuration information, determining that the first time-frequency domain resource is configured; or, in a case that the first indication information is not configured in the resource configuration information, determining that the first time-frequency domain resource is not configured. The resource configuration information is used to configure a time-frequency resource for the first-type terminal device.

In some possible implementations, in a case that the configuration condition is that the first time-frequency domain resource is configured, selecting, according to the configuration condition, the second time-frequency resource used for random access performed by the terminal device includes: selecting the first time-frequency resource as the second time-frequency resource.

In some possible implementations, the method further includes: not selecting a third time-frequency resource as the second time-frequency resource. The third time-frequency resource is a time-frequency resource configured by the network device and used for random access performed by a second-type terminal device.

In some possible implementations, in a case that the configuration condition is that the first time-frequency domain resource is not configured, selecting, according to the configuration condition, the second time-frequency resource used for random access performed by the terminal device includes: selecting a third time-frequency resource as the second time-frequency resource, where the third time-frequency resource is a time-frequency resource configured by the network device and used for random access performed by a second-type terminal device.

In some possible implementations, in a case that the configuration condition is that the first time-frequency domain resource is configured, the method further includes: not selecting a third time-frequency resource as the second time-frequency resource, where the third time-frequency resource is a time-frequency resource configured by the network device and used for random access performed by a second-type terminal device.

In some possible implementations, the second-type terminal device includes at least one of: a terminal device of a RedCap type, or a terminal device of a non-RedCap type.

In some possible implementations, the first-type terminal device includes a terminal device of an eRedCap type.

In some possible implementations, the first time-frequency resource includes a time-frequency resource for 4-step random access.

In some possible implementations, the first time-frequency resource includes a time-frequency resource for 2-step random access.

In a second aspect, the present disclosure provides a method for random access resource configuration. The method for random access resource configuration may be performed by a network device. The method for random access resource configuration includes: configuring a first time-frequency resource for a terminal device, where the first time-frequency resource is a time-frequency resource configured by the network device and dedicated to random access performed by a first-type terminal device. The terminal device is the first-type terminal device.

In some possible implementations, configuring the time-frequency resource for the terminal device includes: sending resource configuration information to the terminal device. The resource configuration information is used to configure a time-frequency resource for the first-type terminal device, the resource configuration information includes first indication information, and the first indication information is used to indicate the first time-frequency resource.

In some possible implementations, the first-type terminal device includes a terminal device of an eRedCap type.

In some possible implementations, the first time-frequency resource includes a time-frequency resource for 4-step random access.

In some possible implementations, the first time-frequency resource includes a time-frequency resource for 2-step random access.

In a third aspect, the present disclosure provides an apparatus for random access resource configuration. The apparatus for random access resource configuration includes a determination module and a selection module. The determination module is configured to determine a configuration condition of a first time-frequency resource. The first time-frequency resource is a time-frequency resource configured by a network device and dedicated to random access performed by a first-type terminal device. The selection module is configured to select a second time-frequency resource used for random access performed by the terminal device. The terminal device is the first-type terminal device.

In some possible implementations, the determination module is configured to: in a case that first indication information is configured in resource configuration information, determine that the first time-frequency domain resource is configured; or, in a case that the first indication information is not configured in the resource configuration information, determine that the first time-frequency domain resource is not configured. The resource configuration information is used to configure a time-frequency resource for the first-type terminal device.

In some possible implementations, the selection module is configured to: in a case that the configuration condition is that the first time-frequency domain resource is configured, select the first time-frequency resource as the second time-frequency resource.

In some possible implementations, the selection module is further configured to: not select a third time-frequency resource as the second time-frequency resource. The third time-frequency resource is a time-frequency resource configured by the network device and used for random access performed by a second-type terminal device.

In some possible implementations, the selection module is configured to: in a case that the configuration condition is that the first time-frequency domain resource is not configured, select a third time-frequency resource as the second time-frequency resource. The third time-frequency resource is a time-frequency resource configured by the network device and used for random access performed by a second-type terminal device.

In some possible implementations, in a case that the configuration condition is that the first time-frequency domain resource is configured, the selection module is further configured to: not select a third time-frequency resource as the second time-frequency resource. The third time-frequency resource is a time-frequency resource configured by the network device and dedicated to random access performed by a second-type terminal device.

In some possible implementations, the second-type terminal device may include at least one of: a terminal device of a RedCap-type or a terminal device of a non-RedCap type.

In some possible implementations, the first-type terminal device may include a terminal device of an eRedCap type.

In some possible implementations, the first time-frequency resource may include a time-frequency resource for 4-step random access.

In some possible implementations, the first time-frequency resource may include a time-frequency resource for 2-step random access.

In a fourth aspect, the present disclosure provides an apparatus for random access resource configuration. The apparatus for random access resource configuration includes a configuration module. The configuration module is configured to configure a first time-frequency resource for a terminal device. The first time-frequency resource is a time-frequency resource configured by the network device and dedicated to random access performed by a first-type terminal device. The terminal device is the first-type terminal device.

In some possible implementations, the configuration module is configured to send resource configuration information to the terminal device. The resource configuration information is used to configure a time-frequency resource for the first-type terminal device. The resource configuration information includes first indication information.

In some possible implementations, the first-type terminal device may include a terminal device of an eRedCap type.

In some possible implementations, the first time-frequency resource may include a time-frequency resource for 4-step random access.

In some possible implementations, the first time-frequency resource may include a time-frequency resource for 2-step random access.

In a fifth aspect, the present disclosure provides a terminal device. The terminal device includes a memory and a processor. The memory is configured to store a computer-executable instruction. The processor is connected to the memory. The processor is configured to execute the computer-executable instruction stored on the memory, to implement the method for random access resource configuration according to the first aspect, the second aspect, or any implementation of the first aspect and the second aspect.

In a sixth aspect, the present disclosure provides a network device. The network device includes a memory and a processor. The memory is configured to store a computer-executable instruction. The processor is connected to the memory. The processor is configured to execute the computer-executable instruction stored on the memory, to implement the method for random access resource configuration according to the first aspect, the second aspect, or any implementation of the first aspect and the second aspect.

In a seventh aspect, the present disclosure provides a computer-readable storage medium. The computer-readable storage medium stores a computer-executable instruction. The computer-executable instruction, after being executed by the processor, causes the method for random access resource configuration according to the first aspect, the second aspect, or any implementation of the first aspect and the second aspect to be implemented.

In the present disclosure, the network device configures the first time-frequency resource as a time-frequency resource dedicated to random access performer by the first-type terminal device, and the first-type terminal device determines the second time-frequency resource used for random access according to the configuration condition of the first time-frequency resource. In this way, according to the present disclosure, a reasonable time-frequency resource may be configured for a terminal device such as an eRedCap terminal device, so as to facilitate random access between the network device and the terminal device.

It should be understood that the technical solutions of the third aspect to the seventh aspect of the present disclosure are consistent with the technical solutions of the first aspect and the second aspect of the present disclosure. Each aspect and the corresponding feasible implementation have similar beneficial effects, and details are not described here again.

### BRIEF DESCRIPTION OF THE DRAWINGS

FIG. 1 is a schematic diagram of a network architecture for implementing a random access procedure.
FIG. 2 is a schematic flowchart of a method for random access resource configuration according to an embodiment of the present disclosure.
FIG. 3 is a schematic flowchart of another method for random access resource configuration according to an embodiment of the present disclosure.
FIG. 4 is a schematic interaction diagram of an example embodiment of a method for random access resource configuration according to an embodiment of the present disclosure.
FIG. 5 is schematic interaction diagram of another example embodiment of a method for random access resource configuration according to an embodiment of the present disclosure.
FIG. 6 is schematic interaction diagram of another example embodiment of a method for random access resource configuration according to an embodiment of the present disclosure.
FIG. 7 is a schematic structural diagram of an apparatus for random access resource configuration according to an embodiment of the present disclosure.
FIG. 8 is a schematic structural diagram of another apparatus for random access resource configuration according to an embodiment of the present disclosure.
FIG. 9 is a schematic structural diagram of a communication device according to an embodiment of the present disclosure.
FIG. 10 is a schematic structural diagram of a terminal device according to an embodiment of the present disclosure;
FIG. 11 is a schematic structural diagram of a network device according to an embodiment of the present disclosure.

### DETAILED DESCRIPTION

Example embodiments will be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the embodiments of the present disclosure. Instead, they are merely examples of apparatuses and methods consistent with some aspects of the embodiments of the present disclosure as detailed in the appended claims.

The terms used in the embodiments of the present disclosure are merely for the purpose of describing particular embodiments, and are not intended to limit the embodiments of the present disclosure. The singular forms "a" and "the" used in the embodiments of the present disclosure and the appended claims are also intended to include plural forms, unless the context clearly indicates other meanings.

It should be understood that although the terms "first", "second", "third", etc., may be used in the embodiments of the present disclosure to describe various information, these information should not be limited to these terms. These terms are only used to distinguish the same type of information from each other. For example, "first information" may also be referred to as "second information", and similarly, "second information" may also be referred to as "first information", without departing from the scope of the embodiments of the present disclosure. Depending on the context, the word "if" as used here may be interpreted as "at the time..." or "when..." or "in response to determining..." etc.

Further, in the description of the embodiments of the present disclosure, "and/or" is merely an association relationship for describing associated objects, indicating that there may be three kinds of relationships. For example, A and/or B may represent the following three cases: A exists alone, both A and B exist, and B exists separately. In addition, in the description of the embodiments of the present disclosure, "a plurality of" may refer to two or more than two.

The technical solutions provided in the embodiments of the present disclosure may be applied to wireless communication between communication devices. The wireless communication between the communication devices may include wireless communication between a network device and a terminal device, wireless communication between a network device and a network device, and wireless communication between a terminal device and a terminal device. In the embodiments of the present disclosure, the term "wireless communication" may also be referred to as "communication". The term "communication" may also be described as "data transmission", "information transmission" or "transmission".

In the wireless communication technology of R18 version in 3GPP, a terminal device of an eRedCap type is introduced. The terminal device of the eRedCap type may also be referred to as an eRedCap terminal device, an enhanced capability-limited terminal device, or the like. The specific name of this type of terminal device is not specifically limited in the embodiments of the present disclosure.

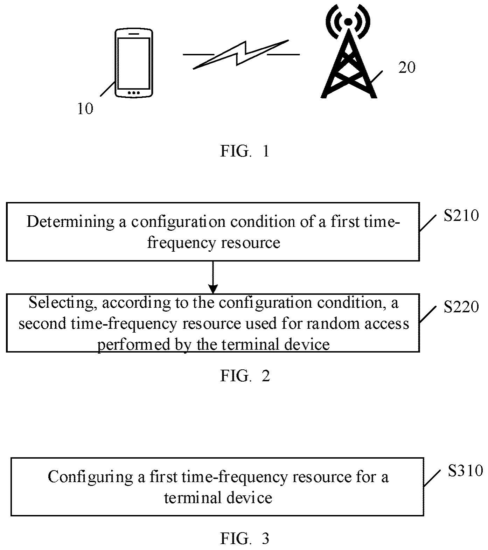

In a communication system, to establish a communication connection between a terminal device and a network device (for example, a base station device), the terminal device needs to initiate a random access procedure to the network device. FIG. 1 is a schematic diagram of a network architecture for implementing a random access procedure. As shown in FIG. 1, the network architecture includes a terminal device 10 and a network device 20. When the terminal device 10 needs to establish a communication connection with the network device 20, the terminal device 10 sends a first random access message to the network device 20 at a random access occasion (RACH occasion, RO), to initiate a random access procedure.

The terminal device 10 may be a terminal device having a wireless communication function, or may be referred to as user equipment (UE). The terminal device may be deployed on land, and may include an indoor or outdoor terminal device, a handheld terminal device, a wearable terminal device, or a vehicle-mounted terminal device. The terminal device may be may also be deployed on a water surface (for example, on a ship). The terminal device may also be deployed in the air (for example, on an aircraft, a balloon, a satellite, or the like). The terminal device may be a mobile phone, a tablet computer (PAD), a computer with a wireless transceiving function, a virtual reality (VR) terminal apparatus, an augmented reality (AR) terminal apparatus, a wireless terminal in industrial control, a wireless terminal in self-driving, a wireless terminal in remote medical, a wireless terminal in a smart grid, a wireless terminal in transportation safety, a wireless terminal in a smart city, a wireless terminal in smart home, or the like. The terminal device may alternatively be a handheld device, a vehicle-mounted device, a wearable device, a computing device, or another processing device connected to a wireless modem having a wireless communication function, or the like. Optionally, the terminal apparatuses in different networks may also be referred to as different names, for example, a terminal apparatus, an access terminal, a subscriber unit, a subscriber station, a mobile station, a mobile station, a remote station, a remote terminal, a mobile device, a user terminal, a terminal, a wireless communication device, a user agent or user apparatus, a cellular telephone, a cordless telephone, a session initiation protocol (SIP) phone, a wireless local loop (WLL) station, a personal digital assistant (PDA), , or a terminal device in the 5G network or the future evolved network, etc.

The network device 20 may be a device that is on the access network side and configured to support a terminal in accessing a wireless communication system. For example, it may be a next generation NodeB (gNB), a transmission reception point (TRP), a relay node, an access point (access point, AP) in a 5G access technology communication system, or the like.

In an embodiment, the terminal device may be a reduced capability terminal device such as the eRedCap type in R18, the RedCap type in R17, or the like, or may be a non-reduced capability terminal device such as a common type, an enhanced mobile broadband (eMBB) type, or the like. Certainly, with the evolution of the wireless communication technology, the reduced capability terminal device may further include other types of devices, and the corresponding non-reduced capability terminal device may also include other types of devices, which is not specifically limited in the embodiments of the present disclosure.

The access network device in the NG-RAN 101 may be a device that is on the access network side and configured to support the terminal device 102 in accessing the wireless communication system. For example, the access network device may be a next generation NodeB (gNB), a transmission reception point (TRP), a relay node, an access point (AP) in a 5G access technology communication system, or the like.

It should be noted that, in the communication system shown in FIG. 1, the functions and interfaces of each device are merely exemplary. When each device is applied to the embodiments of the present disclosure, not all functions are required. All or some devices in the 5G core network 103 may be physical entity devices or virtualized devices, which is not limited here. Certainly, the communication system in the embodiments of the present disclosure may further include other devices not shown in FIG. 1, which is not limited here.

In the R18 version, for the eRedCap terminal device, the time-frequency resource that may be scheduled is further limited. For example, the transmission bandwidth for uplink data supported by the eRedCap terminal device may be limited to 5 MHz. In this case, in the random access procedure, it is necessary to ensure that the time-frequency resource configured for the eRedCap terminal device is within the range of the time-frequency resource supported by the eRedCap terminal device.

In this case, in the random access procedure, how to configure the resource for a terminal device of an eRedCap type is an urgent problem to be solved.

To resolve the foregoing problem, according to an embodiment of the present disclosure, there is provided a method for random access resource configuration. The method for random access resource configuration may be applied to the foregoing communication system.

FIG. 2 is a schematic flowchart of a method for random access resource configuration according to an embodiment of the present disclosure. The method for random access resource configuration is applied to a terminal device. As shown in FIG. 2, the method for random access resource configuration may include step S210 and step S220.

In step S210, a configuration condition of a first time-frequency resource is determined.

Here, the first time-frequency resource is a time-frequency resource configured by a network device and dedicated to random access performed by a first-type terminal device. The terminal device is a first-type terminal device.

In the embodiments of the present disclosure, the first-type terminal device is different from a second-type terminal device. In some cases, the baseband processing bandwidth of the first-type terminal device is less than the baseband processing bandwidth of the second-type terminal device. In an embodiment, the first-type terminal device may include a terminal device of the eRedCap type. In an embodiment, the second-type terminal device may include at least one of the following: a terminal device of the RedCap type, or a terminal device of the non-RedCap type. In an embodiment, the terminal device of the non-RedCap type may include a terminal device of another type other than the eRedCap type and the RedCap type. For example, the terminal device of the non-RedCap type may include a common terminal device or a terminal device of the eMBB type.

In some cases, the first time-frequency resource may be a time-frequency resource dedicated to the first-type terminal device specified in the wireless communication technology of R18 version in 3GPP, or may be another time-frequency resource specified in the wireless communication technology of R18 version in 3GPP.

It may be understood that, before random access between the terminal device and the network device is performed, the network device needs to configure a time-frequency resource for the terminal device. In an embodiment, the terminal device may receive resource configuration information from the network device. The resource configuration information may be used to configure the time-frequency resource for the first-type terminal device. The resource configuration information may be carried in any suitable message or signaling. For example, the resource configuration information may be carried in a system information block (SIB) 1.

In an embodiment, the first time-frequency resource may be indicated by first indication information. Specifically, the first indication information may be used to indicate the time-frequency resource dedicated to random access performed by the first-type terminal device. Then, in a case that the network device configures the first time-frequency resource for the first-type terminal device (that is, the configuration condition is that the first time-frequency resource is configured), the resource configuration information includes the first indication information. By contrast, in a case that the network device does not configure the first time-frequency resource for the first-type terminal device (that is, the configuration condition is that the first time-frequency resource is not configured), the resource configuration information does not include the first indication information. That is, the presence of the first indication information means the configuration of the first time-frequency resource. In this case, determining the configuration condition of the first time-frequency resource in step S210 may specifically include: in a case that the first indication information is configured in the resource configuration information, determining that the first time-frequency domain resource is configured; or, in a case that the first indication information is not configured in the resource configuration information, determining that the first time-frequency domain resource is not configured.

In an embodiment, the resource configuration information may include second indication information. The second indication information may be used to indicate a time-frequency resource for radio access performed by the second-type terminal device. Since the second-type terminal device may include a terminal device of the RedCap type and/or a terminal device of the non-RedCap type, the second indication information may include at least one of the following: third indication information indicating a time-frequency resource for radio access performed by the terminal device of the RedCap type, or fourth indication information indicating a time-frequency resource for radio access performed by the terminal device of the non-RedCap type. It may be understood that, in some cases, the third time-frequency resource may be a time-frequency resource dedicated to the second-type terminal device. In some possible cases, the third time-frequency resource may only include a time-frequency resource dedicated to a terminal device of the RedCap type, but not include a time-frequency resource that may be used for a terminal device of the non-RedCap type, such as a common time-frequency resource.

It may be understood that, in an actual application, the resource configuration information may include first indication information and/or second indication information. Specifically, the resource configuration information may include indication information in the following combination form: first indication information; first indication information and second indication information; or, second indication information. More specifically, the resource configuration information may include indication information in the following combination form: first indication information; first indication information and third indication information; first indication information and fourth indication information; first indication information, third indication information, and fourth indication information; third indication information and fourth indication information; third indication information; or, fourth indication information. It may be learned that the resource configuration information may include all indication information or partial indication information in the second indication information.

In an embodiment, the first time-frequency resource may include a time-frequency resource for 4-step random access (4-step RACH). In an embodiment, the first time-frequency resource may include a time-frequency resource for 2-step random access (2-step RACH). In an example, the first time-frequency resource may only include a time-frequency resource for 2-step random access performed by the first-type terminal device.

In step S220, a second time-frequency resource used for random access performed by the terminal device is selected according to the configuration condition of the first time-frequency resource.

Specifically, the second time-frequency resource is a time-frequency resource used for random access selected by the terminal device according to the configuration condition.

In an embodiment, in a case that the configuration condition is that the first time-frequency domain resource is configured, step S220 may include: selecting the first time-frequency resource as the second time-frequency resource. It may be understood that, in a case that the first time-frequency resource is configured, the first time-frequency resource, as a time-frequency resource dedicated to random access performed by the first-type terminal device, may be preferentially or uniquely selected as the second time-frequency resource used for random access performed by the terminal device.

In an embodiment, in a case that the configuration condition is that the first time-frequency domain resource is not configured, the terminal device does not select a time-frequency resource other than the first time-frequency resource as the second time-frequency resource. In this case, the first time-frequency resource is the unique time-frequency resource for random access performed by the terminal device. In other words, the random access of the terminal device can only be implemented by using the first time-frequency resource. In this case, other time-frequency resources other than the first time-frequency resource cannot be selected for random access of the terminal device. Specifically, for the terminal device, if the time-frequency resource dedicated to random access performed by the first-type terminal device is not configured, the terminal device cannot select a third time-frequency resource as the second time-frequency resource, where the third time-frequency resource is a time-frequency resource configured by the network device and used for random access performed by the second-type terminal device. For example, the expression in the following manner may be used in the embodiment:
if eRedCap indication is configured for a set of Random Access resources:
consider the set of Random Access resources as not available for a Random Access procedure for which eRedCap indication is not applicable.

In an embodiment, in a case that the configuration condition is that the first time-frequency domain resource is not configured, step S220 may include: selecting the third time-frequency resource as the second time-frequency resource. In this case, the first time-frequency resource is a priority time-frequency resource for random access performed by the first-type terminal device. In other words, the random access of the terminal device may be implemented by using the first time-frequency resource, or may be implemented by using the third time-frequency resource. In this case, if the first time-frequency resource is configured, the first time-frequency resource is preferentially selected; or, if the first time-frequency resource is not configured, the third time-frequency resource is selected. For example, the expression in the following manner may be used in the embodiment:
if eRedCap indication is configured for a set of Random Access resources:
consider the set of Random Access resources as not available for a Random Access procedure for which eRedCap indication is not applicable.

In an embodiment, in a case that the configuration condition is that the first time-frequency domain resource is configured, the third time-frequency resource may be a time-frequency resource configured by the network device and used for random access performed by the second-type terminal device. In this case, the third time-frequency resource is only used for random access of the second-type terminal device, and cannot be used for random access of the first-type terminal device. For example, the expression in the following manner may be used in the embodiment:
if RedCap indication is configured for a set of Random Access resources:
   if eRedCap indication is not configured for any set of Random Access resources:
   consider the set of Random Access resources as not available for a Random Access procedure for which RedCap indication or eRedCap indication is not applicable.
else:
   consider the set of Random Access resources as not available for a Random Access procedure for which RedCap indication is not applicable.

FIG. 3 is a schematic flowchart of another method for random access resource configuration according to an embodiment of the present disclosure. The method for random access resource configuration is applied to a network device. As shown in FIG. 3, the method for random access resource configuration may include step S310.

In step S310, a first time-frequency resource is configured for a terminal device.

Here, the first time-frequency resource is a time-frequency resource configured by the network device and dedicated to random access performed by a first-type terminal device. The terminal device is a first-type terminal device.

In the embodiments of the present disclosure, the first-type terminal device is different from the second-type terminal device. In some cases, the baseband processing bandwidth of the first-type terminal device is less than the baseband processing bandwidth of the second-type terminal device. In an embodiment, the first-type terminal device may include a terminal device of the eRedCap type. In an embodiment, the second-type terminal device may include at least one of the following: a terminal device of the RedCap type, or a terminal device of the non-RedCap type. The terminal device of the non-RedCap type may include a terminal device of another type other than the eRedCap type and the RedCap type. For example, the terminal device of the non-RedCap type may include a common terminal device or a terminal device of the eMBB type.

Specifically, to configure the first time-frequency resource for the terminal device, the network device may determine, in the first step, the first time-frequency resource for random access performed by the first-type terminal device, and then notify the terminal device of the determined first time-frequency resource in the second step.

In some cases, the first time-frequency resource determined in the first step may be a time-frequency resource dedicated to the first-type terminal device specified in the wireless communication technology of R18 version in 3GPP, or may be another time-frequency resource specified in the wireless communication technology of R18 version in 3GPP.

In an embodiment, in the second step, the network device may send resource configuration information to the terminal device. The resource configuration information may be used to configure a time-frequency resource for the first-type terminal device. The resource configuration information may be carried in any suitable message or signaling. For example, the resource configuration information may be carried in an SIB1.

In an embodiment, the first time-frequency resource may be indicated by first indication information. Specifically, the first indication information may be used to indicate the time-frequency resource dedicated to random access performed by the first-type terminal device. Then, in a case that the network device configures the first time-frequency resource for the terminal device, the resource configuration information includes the first indication information. By contrast, in a case that the network device does not configure the first time-frequency resource for the terminal device, the resource configuration information does not include the first indication information. In other words, the presence of the first indication information means the configuration of the first time-frequency resource.

In an embodiment, the first time-frequency resource may include a time-frequency resource for 4-step random access. In an embodiment, the first time-frequency resource may include a time-frequency resource for 2-step random access. In an example, the first time-frequency resource may only include a time-frequency resource for 2-step random access performed by the first-type terminal device.

With reference to the embodiments described in FIG. 2 and FIG. 3, in the method for random access resource configuration provided in the embodiments of the present disclosure, the network device configures the first time-frequency resource as a time-frequency resource dedicated to random access performed by the first-type terminal device, and the terminal device determines the second time-frequency resource used for random access according to the configuration condition of the first time-frequency resource. In this way, in the embodiments of the present disclosure, a reasonable time-frequency resource may be configured for a terminal device such as an eRedCap terminal device, so as to facilitate random access between the network device and the terminal device.

To facilitate understanding of the technical solutions in the embodiments of the present disclosure, the method for random access resource configuration of the embodiments of the present disclosure is exemplarily described below in combination with example embodiments. In the following example embodiments, the terminal device may be UE of the eRedCap type, and the network device may be a gNB. Certainly, the terminal device may alternatively be a terminal device of another type, and the network device may alternatively be another network device.

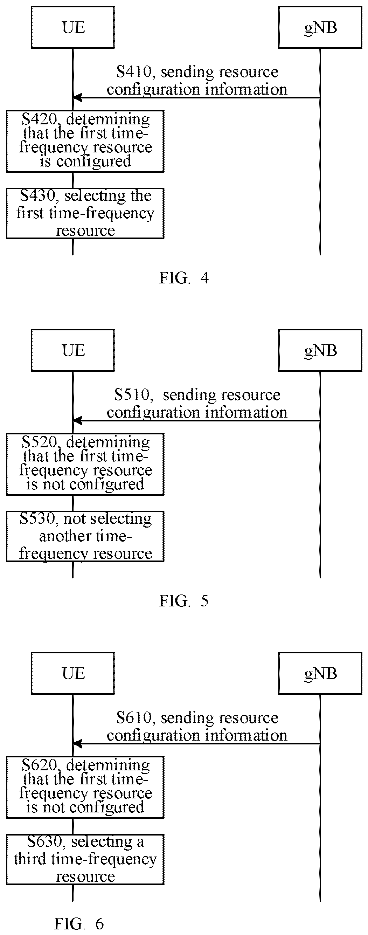

FIG. 4 is a schematic interaction diagram of an example embodiment of a method for random access resource configuration according to an embodiment of the present disclosure. As shown in FIG. 4, the method for random access resource configuration may include step S410, step S420, and step S430.

In step S410, the gNB sends resource configuration information to the UE.

Specifically, the gNB may send the resource configuration information to the UE. The resource configuration information includes first indication information. The first indication information is used to indicate a first time-frequency resource.

In step S420, the UE determines that the first time-frequency resource is configured.

Specifically, after receiving the resource configuration information, the UE determines that the resource configuration information includes the first indication information, and then determines that the first time-frequency resource is configured.

In step S430, the UE selects the first time-frequency resource as second time-frequency resource.

Specifically, in a case that the UE determines that the first time-frequency resource is configured, the UE selects the first time-frequency resource as the second time-frequency resource for random access performed by the UE.

In an embodiment, the resource configuration information may further include second indication information. The second indication information is used to indicate the second time-frequency resource. In an embodiment, since the gNB has configured the first time-frequency resource for the UE, the second time-frequency resource may not be used for random access of the UE.

FIG. 5 is a schematic interaction diagram of another example embodiment of a method for random access resource configuration according to an embodiment of the present disclosure. As shown in FIG. 5, the method for random access resource configuration may include step S510, step S520, and step S530.

In step S510, the gNB sends resource configuration information to the UE.

Specifically, the gNB may send the resource configuration information to the UE. The resource configuration information does not include the first indication information. The first indication information is used to indicate the first time-frequency resource.

In step S520, the UE determines that the first time-frequency resource is not configured.

Specifically, after receiving the resource configuration information, the UE determines that the resource configuration information does not include the first indication information, and then determines that the first time-frequency resource is not configured.

In step S530, the UE does not select a time-frequency resource other than the first time-frequency resource as the second time-frequency resource.

Here, the first time-frequency resource is dedicated to radio access performed by the UE, and the UE performs radio access only by using the first time-frequency resource. Then, in a case that the UE determines that the first time-frequency resource is not configured, the UE does not select another time-frequency resource as the second time-frequency resource. That is, the UE does not determine the second time-frequency resource.

In an embodiment, the resource configuration information may further include second indication information. The second indication information is used to indicate a third time-frequency resource. In this case, if the first time-frequency resource is not configured, the UE does not select the third time-frequency resource as the second time-frequency resource.

It may be understood that, in this example embodiment, in a case that the first time-frequency resource that is the uniquely selected resource is not configured, the UE does not select another time-frequency resource such as the third time-frequency resource as the second time-frequency resource.

FIG. 6 is a schematic interaction diagram of another example embodiment of a method for random access resource configuration according to an embodiment of the present disclosure. As shown in FIG. 6, the method for random access resource configuration may include step S610, step S620, and step S630.

In step S610, the gNB sends resource configuration information to the UE.

Specifically, the gNB may send the resource configuration information to the UE. The resource configuration information does not include the first indication information, but includes the second indication information. The first indication information is used to indicate the first time-frequency resource. The second indication information is used to indicate the third time-frequency resource.

In step S620, the UE determines that the first time-frequency resource is not configured.

Specifically, after receiving the resource configuration information, the UE determines that the resource configuration information does not include the first indication information, and then determines that the first time-frequency resource is not configured.

In step S630, the UE selects the third time-frequency resource as the second time-frequency resource.

Specifically, in a case that the UE determines that the first time-frequency resource is not configured, the UE selects the third time-frequency resource indicated by the second indication information as the second time-frequency resource.

It may be understood that, in this example embodiment, if the first time-frequency resource that is the preferentially selected resource is not configured, the UE may select the third time-frequency resource as the second time-frequency resource for random access performed by the UE.

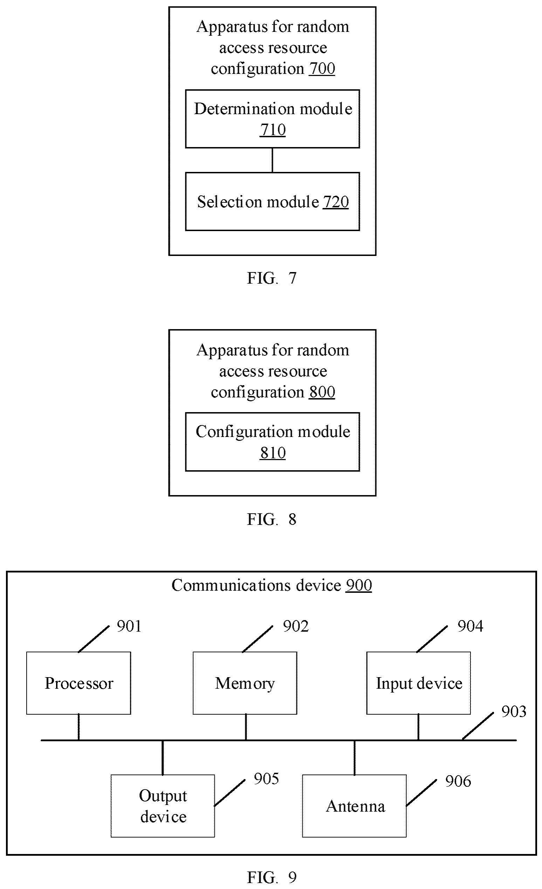

Based on the same inventive concept, according to an embodiment of the present disclosure, there is further provided an apparatus for random access resource configuration. The apparatus for random access resource configuration may be a terminal device in the foregoing communication system or a chip or a system-on-chip in the terminal device, or may be a functional module in the terminal device for implementing the method in the foregoing embodiments. The apparatus for random access resource configuration may implement functions performed by the device for random access resource configuration in the foregoing embodiments, and these functions may be implemented by hardware executing corresponding software. The hardware or software includes one or more modules corresponding to the foregoing functions. FIG. 7 is a schematic structural diagram of an apparatus for random access resource configuration according to an embodiment of the present disclosure. As shown in FIG. 7, the apparatus for random access resource configuration 700 may include a determination module 710 and a selection module 720. The determination module 710 is configured to determine a configuration condition of a first time-frequency resource. The first time-frequency resource is a time-frequency resource configured by a network device and dedicated to random access performed by a first-type terminal device. The selection module 720 is configured to select a second time-frequency resource used for random access performed by the terminal device. The terminal device is the first-type terminal device.

In some possible implementations, the determination module 710 may be configured to: in a case that first indication information is configured in resource configuration information, determine that the first time-frequency domain resource is configured; or, in a case that the first indication information is not configured in the resource configuration information, determine that the first time-frequency domain resource is not configured. The resource configuration information is used to configure a time-frequency resource for the first-type terminal device.

In some possible implementations, the selection module 720 may be configured to: in a case that the configuration condition is that the first time-frequency domain resource is configured, select the first time-frequency resource as the second time-frequency resource.

In some possible implementations, the selection module 720 may be further configured to: not select a third time-frequency resource as the second time-frequency resource. The third time-frequency resource is a time-frequency resource configured by the network device and used for random access performed by a second-type terminal device.

In some possible implementations, the selection module 720 may be configured to: in a case that the configuration condition is that the first time-frequency domain resource is not configured, select a third time-frequency resource as the second time-frequency resource. The third time-frequency resource is a time-frequency resource configured by the network device and used for random access performed by a second-type terminal device.

In some possible implementations, in a case that the configuration condition is that the first time-frequency domain resource is configured, the selection module 720 may be further configured to: not select a third time-frequency resource as the second time-frequency resource. The third time-frequency resource is a time-frequency resource configured by the network device and dedicated to random access performed by a second-type terminal device.

In some possible implementations, the second-type terminal device may include at least one of: a terminal device of a RedCap-type or a terminal device of a non-RedCap type.

In some possible implementations, the first-type terminal device may include a terminal device of an eRedCap type.

In some possible implementations, the first time-frequency resource may include a time-frequency resource for 4-step random access.

In some possible implementations, the first time-frequency resource may include a time-frequency resource for 2-step random access.

It should be noted that, for specific implementations of the determination module 710 and the selection module 720, reference may be made to the detailed descriptions of the embodiments in FIG. 2 and FIG. 4 to FIG. 6.

Based on the same inventive concept, according to an embodiment of the present disclosure, there is further provided provides an apparatus for random access resource configuration. The apparatus for random access resource configuration may be a network device in the communication system or a chip or a system-on-chip in the network device, or may be a functional module in the network device for implementing the method in the foregoing embodiments. The apparatus for random access resource configuration may implement functions performed by the device for random access resource configuration in the foregoing embodiments, and these functions may be implemented by hardware executing corresponding software. The hardware or software includes one or more modules corresponding to the foregoing functions. FIG. 8 is a schematic structural diagram of another apparatus for random access resource configuration according to an embodiment of the present disclosure. As shown in FIG. 8, the apparatus for random access resource configuration 800 may include a configuration module 810. The configuration module 810 is configured to configure a first time-frequency resource for a terminal device. The first time-frequency resource is a time-frequency resource configured by the network device and dedicated to random access performed by a first-type terminal device. The terminal device is the first-type terminal device.

In some possible implementations, the configuration module 810 may be configured to send resource configuration information to the terminal device. The resource configuration information is used to configure a time-frequency resource for the first-type terminal device. The resource configuration information includes first indication information.

In some possible implementations, the first-type terminal device may include a terminal device of an eRedCap type.

In some possible implementations, the first time-frequency resource may include a time-frequency resource for 4-step random access.

In some possible implementations, the first time-frequency resource may include a time-frequency resource for 2-step random access.

It should be noted that, for specific implementation of the configuration module 810, reference may be made to detailed descriptions of the embodiments in FIG. 3 to FIG. 6. For brevity of the specification, details are not described here again.

Based on the same inventive concept, according to an embodiment of the present disclosure, there is provided a communication device. The communications device may be the terminal device or the network device in one or more embodiments. FIG. 9 is a schematic structural diagram of a communication device according to an embodiment of the present disclosure. As shown in FIG. 9, the communications device 900 adopts general computer hardware, that is, the communications device 900 includes a processor 901, a memory 902, a bus 903, an input device 904, and an output device 905.

In some possible implementations, the memory 902 may include computer storage media in a form of volatile and/or nonvolatile memory, such as a read-only memory and/or a random access memory. The memory 902 may store an operating system, an application, other program modules, executable code, program data, user data, or the like.

The input device 904 may be configured to input commands and information to a communication device. The input device 904 may be, for example, a keyboard or pointing device, such as a mouse, trackball, touchpad, microphone, joystick, game pad, satellite television antenna, scanner, or the like. These input devices may be connected to the processor 901 through the bus 903.

The output device 905 may be configured for the communication device to output information. In addition to a monitor, the output device 905 may alternatively be other peripheral output devices, for example, a speaker and/or a printing device. These output devices may also be connected to the processor 901 through the bus 903.

The communication device may be connected to a network through an antenna 906, for example, connected to a local area network (LAN). In a networked environment, the computer-executable instructions stored in the control device may be stored in the remote storage device, and are not limited to being stored locally.

When the processor 901 in the communication device executes the executable code or the application program stored in the memory 902, the communication device performs the communication method for the terminal device side or the network device side in the foregoing embodiments. For a specific execution process, reference may be made to the foregoing embodiments, and details are not described here again.

The memory 902 may store computer-executable instructions for implementing the functions of the determination module 710 and the selection module 720 in FIG. 7. The functions/implementations of the determination module 710 and the selection module 720 in FIG. 7 may be implemented by the processor 901 in FIG. 9 through invoking the computer-executable instructions stored in the memory 902. For specific implementation processes and functions, reference may be made to the foregoing related embodiments.

The memory 902 may store computer-executable instructions for implementing the functions of the configuration module 810 in FIG. 8. The functions/implementations of the configuration module 810 in FIG. 8 may be implemented by the processor 901 in FIG. 9 through invoking the computer-executable instructions stored in the memory 902. For specific implementation processes and functions, reference may be made to the foregoing related embodiments.

Based on the same inventive concept, according to an embodiment of the present disclosure, there is provided a terminal device. The terminal device is consistent with the first-type terminal device in the one or more embodiments. Optionally, the terminal device may be, for example, a terminal device of an eRedCap type.

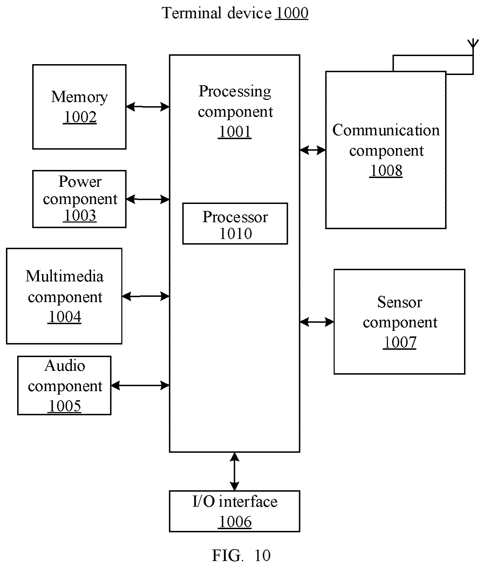

FIG. 10 is a schematic structural diagram of a terminal device according to an embodiment of the present disclosure. As shown in FIG. 10, the terminal device 1000 may include one or more of the following components: a processing component 1001, a memory 1002, a power component 1003, a multimedia component 1004, an audio component 1005, an input/output (I/O) interface 1006, a sensor component 1007, and a communication component 1008.

The processing component 1001 generally controls overall operations of the terminal device 1000, such as operations associated with display, telephone calls, data communications, camera operations, and recording operations. The processing component 1001 may include one or more processors 1010 to execute instructions to perform all or part of the steps in the foregoing methods. In addition, the processing component 1001 may include one or more modules to facilitate interaction between the processing component 1001 and other components. For example, the processing component 1001 may include a multimedia module to facilitate the interaction between the multimedia component 1004 and the processing component 1001.

The memory 1002 is configured to store various types of data to support the operation of the terminal device 1000. Examples of such data include instructions for any application or method operating on the terminal device 1000, contact data, phonebook data, messages, pictures, videos, etc. The memory 1002 may be implemented by any type of volatile or nonvolatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 1003 provides power for various components of the terminal device 1000. The power component 1003 may include a power management system, one or more power supplies, and other components associated with generating, managing, and distributing power for the terminal device 1000.

The multimedia component 1004 includes a screen providing an output interface between the terminal device 1000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touching, sliding, and gestures on the touch panel. The touch sensor may not only sense a boundary of a touching or sliding action, but also sense a duration and pressure associated with a touching or sliding action. In some embodiments, the multimedia component 1004 includes a front camera and/or a rear camera. The front camera and/or the rear camera may receive external multimedia data when the device 1000 is in an operation mode, such as a photographing mode or a video mode. Each of the front camera and the rear camera may be a fixed optical lens system or have focal length and optical zoom capability.

The audio component 1005 is configured to output and/or input audio signals. For example, the audio component 1005 includes a microphone (MIC) configured to receive an external audio signal when the terminal device 1000 is in an operation mode, such as a call mode, a recording mode, and a voice recognition mode. The received audio signal may be further stored in the memory 1002 or transmitted via the communication component 1008. In some embodiments, the audio component 1005 further includes a speaker to output audio signals.

The I/O interface 1006 provides an interface between the processing component 1001 and a peripheral interface module. The peripheral interface module may be a keyboard, a click wheel, a button, or the like. The button may include, but is not limited to, a home button, a volume button, a starting button, or a locking button.

The sensor component 1007 includes one or more sensors, configured to provide status assessments of various aspects of the terminal device 1000. For example, the sensor component 1007 may detect an on/off state of the device 1000, relative positioning of the components. For example, the components may be a display and a keypad of the terminal device 1000. The sensor component 1007 may further detect a position change of the terminal device 1000 or one component in the terminal device 1000, and a presence or absence of a contact between the user and the terminal device 1000, an orientation or acceleration/deceleration of the terminal device 1000, and a temperature change of the terminal device 1000. The sensor component 1007 may include a proximity sensor configured to detect the presence of nearby objects without any physical contact. The sensor component 1007 may also include an optical sensor, such as a CMOS or CCD image sensor, for use in imaging applications. In some embodiments, the sensor component 1007 may further include an acceleration sensor, a gyroscope sensor, a magnetic sensor, a pressure sensor, or a temperature sensor.

The communication component 1008 is configured to facilitate wired or wireless communication between the terminal device 1000 and other devices. The terminal device 1000 may access a wireless network based on a communication standard, such as Wi-Fi, 2G, or 3G, or a combination of them. In an example embodiment, the communication component 1008 receives a broadcast signal or broadcast related information from an external broadcast management system via a broadcast channel. In an example embodiment, the communication component 1008 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the terminal device 1000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above-described methods.

Based on the same inventive concept, according to an embodiment of the present disclosure, there is provided a network device. The network device is consistent with the network device in the foregoing one or more embodiments.

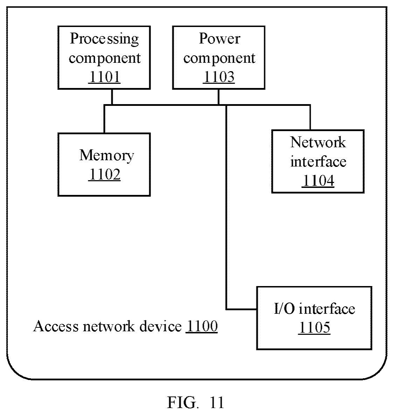

FIG. 11 is a schematic structural diagram of a network device according to an embodiment of the present disclosure. The network device may be, for example, an access network device. As shown in FIG. 11, the network device 1100 may include: a processing component 1101, which further includes one or more processors; and, memory resources represented by the memory 1102, configured to store instructions (for example, an application) executable by the processing component 1101. The application stored in the memory 1102 may include one or more modules each corresponding to a set of instructions. In addition, the processing component 1101 is configured to execute instructions to perform any method applied to the access network device A in the foregoing method.

The access network device 1100 may further include: a power component 1103, configured to perform power management of the access network device 1100; a wired or wireless network interface 1104, configured to connect the access network device 1100 to a network; and, an input/output (I/O) interface 1105. The access network device 1100 may operate based on an operating system stored in the memory 1102, for example, Windows Server TM, Mac OS XTM, UnixTM, LinuxTM, FreeBSDTM, or the like.

Based on the same inventive concept, according to an embodiment of the present disclosure, there is further provided a computer-readable storage medium. The computer-readable storage medium stores computer-executable instructions. When running on a computer, the instruction is configured to perform the method for random access resource configuration for the terminal device side or the network device side in one or more embodiments.

Based on the same inventive concept, according to an embodiment of the present disclosure, there is further provided a computer program or a computer program product. When the computer program product is executed on a computer, the computer is enabled to implement the method for random access resource configuration for the terminal device side or the network device side in one or more embodiments.

Other embodiments of the present invention will be apparent to those skilled in the art from consideration of the specification and practice of the invention disclosed here. The present disclosure is intended to cover any variations, uses, or adaptations of the present invention following the general principles of the present disclosure and including common general knowledge and conventional technical means in the art not disclosed in the present disclosure. It is intended that the specification and examples should be considered as examples only, with a true scope and spirit of the present invention being indicated by the following claims.

It will be appreciated that the present invention is not limited to the exact construction that has been described above and illustrated in the accompanying drawings, and that various modifications and changes may be made without departing from the scope of the present disclosure. It is intended that the scope of the invention should be limited only by the appended claims.

## Claims

1. A method for random access resource configuration, performed by a terminal device, and comprising:
determining a configuration condition of a first time-frequency resource, wherein the first time-frequency resource is a time-frequency resource configured by a network device and dedicated to random access performed by a first-type terminal device; and
selecting, according to the configuration condition, a second time-frequency resource used for random access performed by the terminal device;
wherein the terminal device is the first-type terminal device.

2. The method according to claim 1, wherein determining the configuration condition of the first time-frequency resource comprises:
in a case that first indication information is configured in resource configuration information, determining that the first time-frequency domain resource is configured; or
in a case that the first indication information is not configured in the resource configuration information, determining that the first time-frequency domain resource is not configured;
wherein the resource configuration information is used to configure a time-frequency resource for the first-type terminal device.

3. The method according to claim 1 or 2, wherein in a case that the configuration condition is that the first time-frequency domain resource is configured, selecting, according to the configuration condition, the second time-frequency resource used for random access performed by the terminal device comprises:
selecting the first time-frequency resource as the second time-frequency resource.

4. The method according to claim 3, further comprising:
not selecting a third time-frequency resource as the second time-frequency resource, wherein the third time-frequency resource is a time-frequency resource configured by the network device and used for random access performed by a second-type terminal device.

5. The method according to claim 1 or 2, wherein in a case that the configuration condition is that the first time-frequency domain resource is not configured, selecting, according to the configuration condition, the second time-frequency resource used for random access performed by the terminal device comprises:
selecting a third time-frequency resource as the second time-frequency resource, wherein the third time-frequency resource is a time-frequency resource configured by the network device and used for random access performed by a second-type terminal device.

6. The method according to claim 1 or 2, wherein in a case that the configuration condition is that the first time-frequency domain resource is not configured, the method further comprises:
not selecting a third time-frequency resource as the second time-frequency resource, wherein the third time-frequency resource is a time-frequency resource configured by the network device and used for random access performed by a second-type terminal device.

7. The method according to claim 5 or 6, wherein the second-type terminal device comprises at least one of: a terminal device of a reduced capability, RedCap, type, or a terminal device of a non-RedCap type.

8. The method according to any one of claims 1 to 7, wherein the first-type terminal device comprises a terminal device of an enhanced reduced capability, eRedCap, type.

9. The method according to any one of claims 1 to 8, wherein the first time-frequency resource comprises a time-frequency resource for 4-step random access.

10. The method according to any one of claims 1 to 9, wherein the first time-frequency resource comprises a time-frequency resource for 2-step random access.

11. A method for random access resource configuration, performed by a network device, and comprising:
configuring a first time-frequency resource for a terminal device, wherein the first time-frequency resource is a time-frequency resource configured by the network device and dedicated to random access performed by a first-type terminal device;
wherein the terminal device is the first-type terminal device.

12. The method according to claim 11, wherein configuring the time-frequency resource for the terminal device comprises:
sending resource configuration information to the terminal device, wherein the resource configuration information is used to configure a time-frequency resource for the first-type terminal device, the resource configuration information comprises first indication information, and the first indication information is used to indicate the first time-frequency resource.

13. The method according to claim 11 or 12, wherein the first-type terminal device comprises a terminal device of an enhanced reduced capability, eRedCap, type.

14. The method according to any one of claims 11 to 13, wherein the first time-frequency resource comprises a time-frequency resource for 4-step random access.

15. The method according to any one of claims 11 to 13, wherein the first time-frequency resource comprises a time-frequency resource for 2-step random access.

16. An apparatus for random access resource configuration, comprising:
a determination module, configured to determine a configuration condition of a first time-frequency resource, wherein the first time-frequency resource is a time-frequency resource configured by a network device and dedicated to random access performed by a first-type terminal device; and
a selection module, configured to select a second time-frequency resource used for random access performed by the terminal device;
wherein the terminal device is the first-type terminal device.

17. An apparatus for random access resource configuration, comprising:
a configuration module, configured to configure a first time-frequency resource for a terminal device, wherein the first time-frequency resource is a time-frequency resource configured by a network device and dedicated to random access performed by a first-type terminal device;
wherein the terminal device is the first-type terminal device.

18. A terminal device, comprising:
a memory, configured to store a computer-executable instruction; and
a processor, connected to the memory;
wherein the processor is configured to execute the computer-executable instruction stored on the memory to implement the method for random access resource configuration according to any one of claims 1 to 10.

19. A network device, comprising:
a memory, configured to store a computer-executable instruction; and
a processor, connected to the memory;
wherein the processor is configured to execute the computer-executable instruction stored on the memory to implement the method for random access resource configuration according to any one of claims 11 to 15.

20. A computer storage medium, having a computer-executable instruction stored thereon, wherein the computer-executable instruction, after being executed by a processor, causes the method for random access resource configuration according to any one of claims 1 to 15 to be implemented.
